# EUROPEAN PATENT APPLICATION

(11) **EP 1 938 696 A1**
(43) Date of publication of application: **02.07.2008**
(21) Application number: 07123018.9
(22) Date of filing: 12.12.2007
(51) Int. Cl.: A23G 9/12, A23G 9/22, F16P 3/18

(54) **Machine for making ice-cream products**

(30) Priority: 28.12.2006 IT BO20060889
(71) Applicant: Ali SpA, 20123 Milano (IT)
(72) Inventor: COCCHI, Gino, 40137, BOLOGNA (IT); ZANIBONI, Gianni, 40037, Borgonuovo di Sasso Marconi (Bologna) (IT); LAZZARINI, Roberto, 42100, Reggio Emilia (IT)
(74) Representative: Ghioni, Carlo Raoul Maria

(57) **Abstract**

A machine for making ice-cream products comprises at least a motor (3) operatively connected to a rod-shaped element (4) so as to drive the rotation of the latter about its own axis of extension (X), grip means (7) for moving the motor (3) and/or the rod-shaped element (4) at least along the axis of rotation (X) of the rod-shaped element (4) so that the rod-shaped element (4) is at least partly immersed in a containment tank. The machine (1) comprises means (9) for activating the motor (3), preferably contact sensors, positioned on the grip means (7).

## Description

The present invention relates to a machine for making ice-cream products.

More particularly, the present invention relates to a machine for making mixtures of products used for preparing artisan ice-creams and the like.

As is known, a machine of this type comprises a rod-shaped element which is driven in rotation and immersed in a tank or container holding the ingredients of the mixture being prepared.

The rotation of the rod-shaped element is driven by a motor, normally electric, which is directly connected to the rod-shaped element and positioned immediately above it.

One end of the rod-shaped element supports a suitably shaped element which is immersed in the mixture of ingredients and, rotating, processes the ingredients, suitably processing and mixing them.

In this type of machine, which, as already indicated, is used in particular in the artisan products sector, the tubular element is immersed in the above-mentioned tank directly by an operator.

In particular, the operator grips a handgrip present at the motor body and lowers the motor - rod-shaped element assembly until the latter is at least partly immersed in the tank.

At this point, the operator, with his free hand or releasing a handgrip, presses a switch which activates the electric motor, causing the rod-shaped element to start rotating.

At the end of the mixture preparation cycle, the operator again operates the activation switch, interrupting rod-shaped element rotation.

However, there may be several problems linked to use of the prior art machines briefly described above.

Since the operator must operate a switch to activate the machine, he must hold the motor - rod-shaped element assembly with only one hand during the start and stop step.

Since the motor - rod-shaped element assembly is very often heavy, excessive effort by the operator is often required.

Moreover, if during machine operation the operator inadvertently immerses a hand in the tank containing the mixture, for example to check the consistency, dangerous accidents may occur due to the fact the rod-shaped element rotates at a speed of several thousand revolutions per minute.

In addition to this, the mixing times and the quantities of ingredients needed to make up the mixture are left to the operator's experience, even if aided by predetermined recipes.

In this context, the aim of the present invention is to overcome the above-mentioned disadvantages.

In particular, the present invention has for an aim to provide a machine for making ice-cream products which is easy to use and does not require excessive effort by the operator.

The present invention also has for an aim to provide a machine for making ice-cream products which guarantees high standards of safety during use.

Another aim of the present invention is to provide a machine for making ice-cream products which can aid the operator in the ice-cream product preparation steps.

Accordingly, the present invention achieves these aims with a machine for making ice-cream products comprising the features described in one or more of the claims herein.

The technical features of the invention, with reference to the above aims, are clearly described in the claims below and its advantages are more apparent from the detailed description which follows, with reference to the accompanying drawings which illustrate a preferred embodiment of the invention provided merely by way of example without restricting the scope of the inventive concept, and in which:
- Figure 1 is a perspective view, with some parts cut away to better illustrate others, of a machine for making ice-cream products in accordance with the present invention;

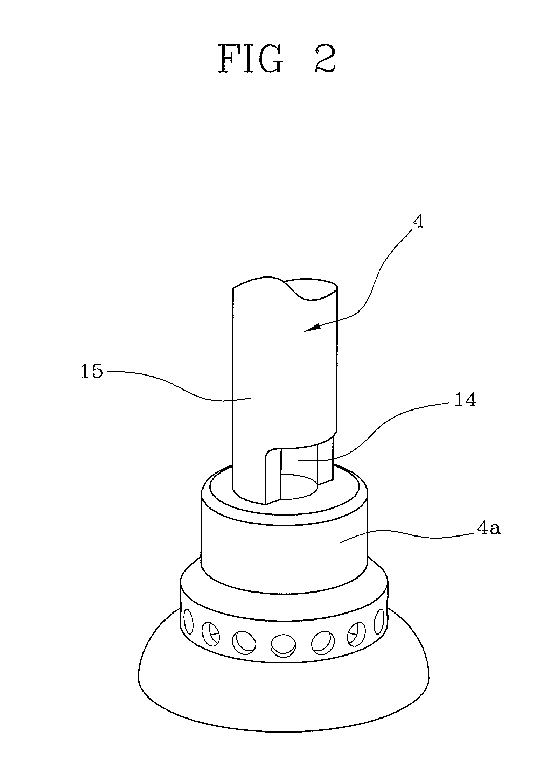

- Figure 2 is an enlarged view of a detail of the machine of Figure 1 with further parts cut away to better illustrate others; and
- Figure 3 is a block diagram relative to the reciprocal connection of several elements of the machine of Figure 1.

With reference to the accompanying drawings, the numeral 1 denotes as a whole a machine for making ice-cream products in accordance with the present invention.

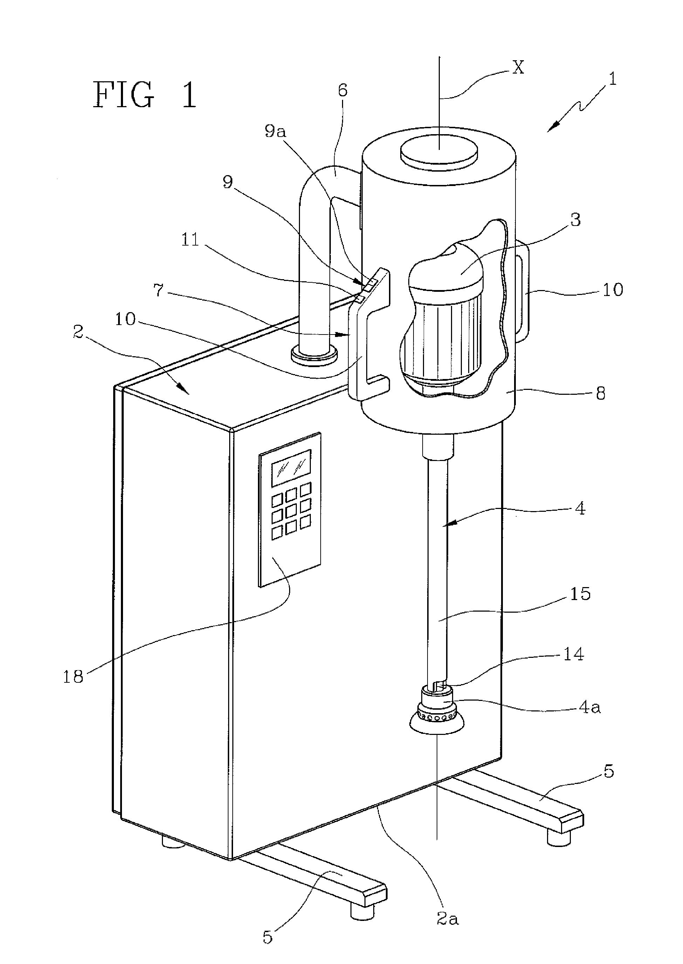

The machine 1 comprises a supporting body 2 on which a motor 3 (schematically illustrated in Figure 1) and a rod-shaped element 4 driven in rotation by the motor 3 are mounted in a cantilever fashion.

In the preferred embodiment, the supporting body 2 comprises two supporting elements 5, at a first end 2a of the supporting body 2, designed to rest on a work surface to stably support the entire machine.

The supporting body 2 is substantially box-shaped and contains a plurality of control elements for the motor 3 - rod-shaped element 4 assembly which are described below.

At the opposite end to the supporting elements 5 there extends a sliding guide 6 for the motor 3 - rod-shaped element 4 assembly, allowing the assembly to move along an axis X substantially coinciding with the axis of rotation of the rod-shaped element 4.

Said movement is performed by an operator using grip means 7.

In this way, positioning a tank or container (not illustrated) containing the ingredients needed to prepare an ice-cream product mixture under the rod-shaped element 4, it is possible to at least partly immerse the latter in the tank to process the mixture.

In the preferred embodiment, the guide 6 is substantially L-shaped, is integral with the motor 3 and slides in a suitable groove (not illustrated) made in the supporting body 2.

Therefore, the guide 6 supports the motor 3 - rod-shaped element 4 assembly in a cantilever fashion relative to the supporting body 2, as illustrated in Figure 1.

In particular, the motor 3 is housed in a containment body 8 to completely shield any mechanical element and prevent contamination of the mixture ingredients.

Below the containment body 8 the rod-shaped element 4 extends away from it, on which it is possible to mount, on each occasion, a different processing head 4a such as a stirrer, an emulsifier, a blender or other devices designed to process the mixture being prepared by means of a rotary movement.

To activate rotation of the rod-shaped element 4 there are advantageously motor 3 activation elements 9 positioned on the grip means 7, so that to activate the rod-shaped element 4 the operator must make contact with the grip means 7.

The latter consist of two handles 10 integral with the containment body 8, each designed to be gripped by the operator.

In particular, each handle 10 has a respective activation element 9. The latter advantageously consist of contact sensors 9a, so that the operator can activate the rod-shaped element 4 while keeping both hands on the handles 10.

A type of contact sensor 9a particularly advantageous in the present invention is a capacitive sensor.

More particularly, the contact sensor 9a is a capacitive sensor in which one electrode of each capacitor is inside the handle 10, whilst the other electrode is on the outer surface of the handle 10, so that it can be gripped by the operator, making the circuit with the ground (earth) and varying the capacitor capacitance.

Advantageously, on the handles 10 there is a potentiometer 11 which is also capacitive, for varying the speed of rotation of the rod-shaped element 4, preferably between 2000 and 12000 revolutions per minute, without the operator being forced to release his grip on the handles 10 even temporarily.

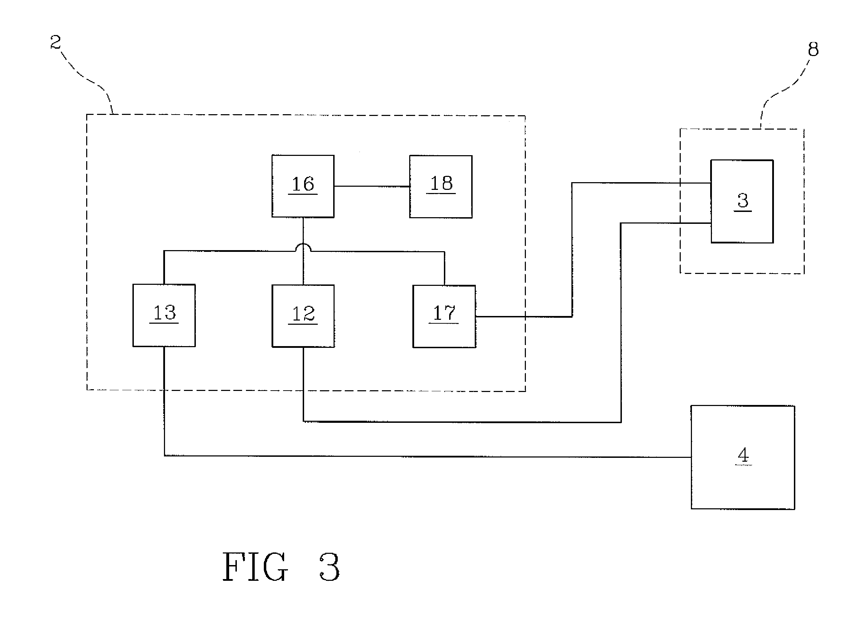

It is important to emphasise that the motor 3 is electric. To make the rod-shaped element 4 rotate at the high numbers of revolutions indicated above, the motor 3 is connected to an inverter 12 (Figure 3).

The electric motor 3 speed of rotation is directly linked to the frequency of the power supply voltage and would not be able to reach the high speeds of rotation indicated above. The inverter 12 used in the present invention is, for example, of the type operating from alternating current to alternating current (AC-AC). The input voltage is first converted into direct current by a rectifier and levelled by capacitors, then applied to the inversion section. The aim of this double operation is to vary the frequency as required within a predetermined range (corresponding to the number of revolutions indicated above) without the presence of a transformer.

The inversion circuit is housed in the supporting body 2 and is operatively connected to the motor 3 by means of electrical connections running inside the guide 6.

In accordance with what is described above, when preparing a mixture for ice-cream products an operator must grip the handles 10 on the containment body 8 with both hands in order to be able to start the motor 3 and make the rod-shaped element 4 rotate.

The operator must then lower the motor 3 - rod-shaped element 4 assembly into the mixture located in the containment tank, aided in this operation by the guide 6.

The operator uses the capacitive potentiometer 11 to regulate the speed of rotation of the rod-shaped element 4 according to the mixture being prepared.

To further facilitate the work of the operator, the machine 1 also comprises means 13 for generating steam (schematically illustrated in Figure 3), preferably positioned inside the supporting body 2. The steam generating means 13 are in fluid communication with the rod-shaped element 4. More particularly, they are in fluid communication with an opening 14 at the lower end 15 of the rod-shaped element 4, to allow steam to be introduced into the mixture being processed, for example to heat it without the need to interrupt processing.

Steam dispensing is also activated by a capacitive potentiometer (not illustrated) positioned on one or both handles 10.

More particularly, inside the supporting body 2 there are means 15 for controlling the quantity of steam sent to the rod-shaped element 4 according to the mixture being prepared, as is schematically illustrated in Figure 3.

Advantageously, in this way, it is possible to determine the initial ingredients of the mixture, and in particularly the quantity of water initially introduced into the mixture, taking into account the fact that additional water, in the form of steam, will subsequently be introduced.

All of these operations, carried out according to the type of mixture being produced, are managed by a control unit 16 (Figure 3) also inserted in the supporting body 2.

In particular, the control unit 16 is operatively connected to the above-mentioned inverter 12 to make the rod-shaped element 4 rotate at an optimum speed of rotation for the type of mixture being prepared, to the steam generation means 13 for introducing a predetermined and precise quantity of water in the form of steam into the mixture being processed, and to a timer 17 located inside the supporting body 2 to keep the rod-shaped element 4 rotating for a predetermined time.

The functions managed by the control unit 16 are activated by means of a display 18 positioned on the outer surface of the supporting body 2 (Figures 1 and 3).

The operator uses the display 18 to indicate to the control unit 16 the type of mixture that must be prepared.

According to the data entered by the operator, the control unit 16 sets the number of revolutions for the rod-shaped element 4, the length of time for which it will rotate, the moment when steam must be introduced into the mixture and the quantity of steam to be introduced.

All of these functions are activated at the moment when the operator grips the handles 10 with both hands, therefore operating the activation elements 9.

The display 18 also allows one or more of the above-mentioned functions to be disabled, leaving to the operator's discretion the choice of the corresponding parameter or parameters not managed by the control unit 16, for example to experiment with the preparation of new mixtures.

The invention described above is susceptible of industrial application and may be modified and adapted in several ways without thereby departing from the scope of the inventive concept. Moreover, all the details of the invention may be substituted by technically equivalent elements.

## Claims

1. A machine for making ice-cream products comprising at least a motor (3) operatively connected to a rod-shaped element (4) at least to drive the rotation of the latter about its own axis of extension (X), grip means (7) for moving the motor (3) and/or the rod-shaped element (4) at least along the axis of rotation (X) of the rod-shaped element (4) so that the rod-shaped element (4) is at least partly immersed in a containment tank; the machine being **characterised in that** it comprises elements (9) for activating the motor (3) which are positioned on the grip means (7).

2. The machine according to claim 1, **characterised in that** the grip means (7) comprise two handles (10), each of which can be gripped by an operator.

3. The machine according to claim 2, **characterised in that** the activation elements (9) comprise contact sensors (9a) positioned on each handle (10) to ascertain the presence of the hands of an operator and activate the motor (3).

4. The machine according to claim 3, **characterised in that** the contact sensors (9a) are of the capacitive type.

5. The machine according to claim 2, **characterised in that** it comprises means (11) for varying the speed of rotation of the tubular element, said means being positioned on at least one of the handles (10).

6. The machine according to one or more of the foregoing claims, **characterised in that** it comprises a containment body (8) for the motor (3); the rod-shaped element (4) extending away from the containment body (8) and the grip means (7) being positioned on the containment body (8).

7. The machine according to claim 6, **characterised in that** the containment body (8) is slidably connected to a guide (6) for moving the motor (3) and the rod-shaped element (4).

8. The machine according to one or more of the foregoing claims, **characterised in that** it comprises a supporting body (2) which can be stably rested on a work surface; the motor (3) and the tubular element (4) being mounted in a cantilever fashion relative to the supporting body (2) so that the rod-shaped element (4) can be at least partly immersed in a container holding a food product mixture which can be placed directly under the rod-shaped element (4).

9. The machine according to one or more of the foregoing claims, **characterised in that** it comprises steam generation means; the rod-shaped element (4) being in fluid communication with the steam generation means and comprising an opening (12) for dispensing the steam.

10. The machine according to claim 9, **characterised in that** it comprises means (13) for controlling the quantity of steam dispensed from the rod-shaped element (4), so as to introduce a predetermined quantity of steam into a container holding a food product mixture according to the ice-cream product being prepared.

11. The machine according to claim 10, **characterised in that** it comprises a timer (17) connected to the motor (3) so that the rod-shaped element (4) is made to rotate for predetermined times according to the ice-cream product being prepared.

12. The machine according to any of the foregoing claims, **characterised in that** the motor (3) is an electric motor operatively connected to an inverter (12) in order to make the rod-shaped element rotate at between 2000 and 12000 revolutions per minute.

13. The machine according to claims 10, 11 and 12, **characterised in that** it comprises a control unit (16) operatively connected to the steam generation means (13), to the inverter (12) and to the timer (17) for optimising the quantity of steam dispensed, the number of revolutions of the rod-shaped element (4) and the length of time for which the rod-shaped element (4) rotates according to the type of ice-cream mixture being prepared.

14. The machine according to any of the foregoing claims, **characterised in that** it comprises a stirrer head (4a) which can be connected to the rod-shaped element (4).

15. The machine according to any of the foregoing claims, **characterised in that** it comprises an emulsifier head (4a) which can be connected to the rod-shaped element (4).

16. The machine according to any of the foregoing claims, **characterised in that** it comprises a blender head (4a) which can be connected to the rod-shaped element (4).
